Europäisches Patentamt

European Patent Office

Office européen des brevets

(11) Numéro de publication : **0 370 858 B1**

(12) **FASCICULE DE BREVET EUROPEEN**

(19)

(45) Date de publication du fascicule du brevet :
**11.11.92 Bulletin 92/46**

(21) Numéro de dépôt : **89403106.1**

(22) Date de dépôt : **10.11.89**

(51) Int. CI.⁵ : **B01D 63/02**

(54) Module de filtration comportant un baffle de protection du faisceau de fibres de filtration.

(30) Priorité : **21.11.88 FR 8815098**

(43) Date de publication de la demande :
**30.05.90 Bulletin 90/22**

(45) Mention de la délivrance du brevet :
**11.11.92 Bulletin 92/46**

(84) Etats contractants désignés :
**AT BE CH DE ES FR GB GR IT LI LU NL SE**

(56) Documents cités :
**DE-A- 3 004 932**
**FR-A- 2 267 138**
**GB-A- 1 550 242**
**US-A- 4 237 013**

(56) Documents cités :
**PATENT ABSTRACTS OF JAPAN, vol. 2, no. 31
(C-77)[4243], 27 février 1978; & JP-A-52 126 681
(ASAHI KASEI KOGYO K.K.)24-10-1977
PATENT ABSTRACTS OF JAPAN, vol. 12, no.
59 (C-478)[2906], 23 février 1988; & JP-A-62 204
804 (DAICEL CHEM. IND. LTD.)09-09-1987**

(73) Titulaire : **LYONNAISE DES EAUX-DUMEZ
72 Avenue de la Liberté
F-92022 Nanterre (FR)**

(72) Inventeur : **Espenan, Jean-Michel Bâtiment B2
Résidence de la Bigorre 31-33 rue de Touraine
F-31100 Toulouse (FR)**

(74) Mandataire : **Cournarie, Michèle et al
Office Blétry 2, boulevard de Strasbourg
F-75010 Paris (FR)**

EP 0 370 858 B1

Jouve, 18, rue Saint-Denis, 75001 PARIS

## Description

L'invention concerne des baffles de protection pour des faisceaux de fibres creuses de filtration.

Les fibres ou membranes tubulaires de filtration sont montées sous forme de faisceaux cylindriques dont les extrémités sont empotées dans des plaques de résine, dans des carters munis latéralement d'orifices d'entrée ou de sortie, l'ensemble constituant un module de filtration. Les orifices de sortie servant également pour l'application de contre-pressions de liquide en vue d'effectuer le rétrolavage des fibres, il est nécessaire, dans tous les cas de prévoir au niveau des orifices des baffles de protection pour éviter d'endommager les fibres de structure fragile.

La mise en place de baffles dans un carter ou la réalisation de têtes de carter avec baffle est complexe et coûteuse.

Le problème est résolu selon l'invention par utilisation, en tant que baffle, d'une gaine thermoretractable, cette gaine entourant le faisceau de fibres sur une relativement faible hauteur au niveau du ou des orifices, la gaine étant placée sur un manchon entourant le faisceau.

L'invention fournit donc un module de filtration comportant un faisceau de fibres creuses de filtration monté dans un carter, caractérisé en ce que le faisceau est muni d'une gaine thermorétractable placée sur un manchon contenant le faisceau et faisant office de baffle, au niveau de chaque orifice latéral du carter, et de façon tout à fait avantageuse un module dans lequel le faisceau comporte à peu près ou à mi-hauteur une gaine thermorétractable, au niveau de l'unique orifice latéral.

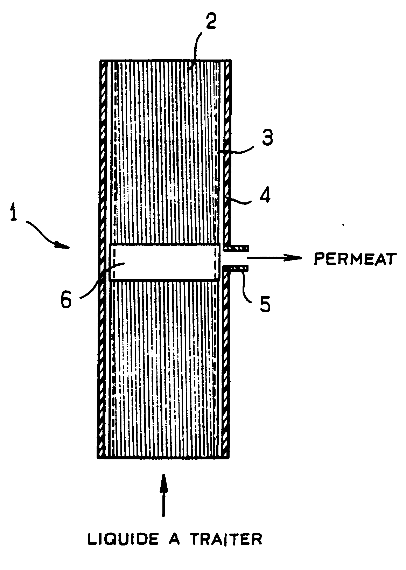

D'autres caractéristiques et avantages de l'invention apparaîtront à la lecture de la description qui suit, faite en référence au dessin qui représente schématiquement un module de filtration selon l'invention.

Un module de filtration 1 se compose d'un faisceau 2 de fibres creuses de filtration montées de façon classique dans un manchon rigide 3 en matière plastique largement perforé et empotées au moins à l'une de leurs extrémités dans une plaque tubulaire en résine (non visible sur la figure). Le faisceau 2 peut être lui-même subdivisé en plusieurs faisceaux élémentaires, réunis par empotage dans une même plaque tubulaire. Le tout est contenu dans un carter 4 en plastique moulé. La figure représente le cas où le liquide à traiter pénètre par l'extrémité des fibres et sort latéralement par un orifice 5 unique (servant d'orifice d'entrée lors des rétrolavages) mais ce sens de circulation peut bien entendu être inversé, le liquide pénétrant latéralement et sortant par les extrémités des fibres, selon la structure de ces dernières.

Afin de protéger la structure fibreuse,on place autour du manchon 3 une gaine thermorétractable 6, au niveau de l'orifice 5, sur la hauteur de manchon sur laquelle est projeté le liquide entrant. La gaine est mise en place sur le manchon et subit la thermorétraction avant l'introduction du faisceau de fibres dans le manchon, car la température nécessaire à cette opération pourrait endommager les fibres polymères qui sont sensibles à la chaleur.

Comme gaine thermorétractable, on peut avantageusement -en particulier sur le plan économique-utiliser les gaines thermorétractables que l'on trouve dans le commerce pour le gainage des câbles et fils électriques ou pour la protection de cylindres rotatifs.

Un avantage complémentaire de l'utilisation d'une telle gaine thermorétractable est qu'au cours de son retrait, elle vient épouser intimement la surface du manchon 3, qui en raison de sa structure perforée est régulièrement ondulée. Il y a de ce fait blocage de la gaine sur le manchon et on évite tout glissement qui pourrait sinon se produire entre deux produits en matière plastique. Il y a alors un positionnement précis de la gaine sur le manchon, et donc par rapport à l'orifice considéré.

Pour limiter la perte de charge, d'ailleurs faible qui se produit au niveau de la gaine, la partie de la gaine non directement exposée au jet de liquide, c'est-à-dire celle se trouvant à l'arrière du manchon par rapport à l'orifice 5, peut être perforée ou ajourée, la ou les ouvertures pouvant être de toutes formes et dimensions.

Une telle gaine trouve une grande utilité dans les modules à orifice latéral unique mais peut s'employer bien entendu au niveau d'un quelconque orifice.

## Revendications

1. Module de filtration comportant un faisceau de fibres creuses de filtration monté dans un carter (4), caractérisé en ce que le faisceau (2) est muni d'une gaine (6) thermorétractable placée sur un manchon contenant le faisceau et faisant office de baffle, au niveau des orifices latéraux (5) du carter (4).

2. Module de filtration selon la revendication 1, caractérisé en ce que le faisceau comporte à peu près ou à mi-hauteur une gaine thermorétractable, au niveau de l'unique orifice latéral.

3. Module selon l'une ou l'autre des revendications 1 et 2, caractérisé en ce que la gaine thermorétractable est perforée sur la partie non exposée au liquide entrant.

## Patentansprüche

1. Filtereinheit mit einem aus hohlen Filterfasern bestehendes Bündel, das in einem Gehäuse eingebaut ist, dadurch gekennzeichnet, daß das Bündel (2) mit einer unter Wärmeeinwirkung schrumpfenden Hülse (6) versehen ist, die auf einem das Bündel enthaltenden Überschiebrohr und anstelle einer Ablenkwand in Höhe der seitlichen Öffnungen (5) des Gehäuses (4) angeordnet ist.

2. Filtereinheit nach Anspruch 1, dadurch gekennzeichnet, daß das Bündel beinahe in oder auf halber Höhe eine unter Wärmeeinwirkung schrumpfende Hülse in Höhe der einzigen seitlichen Öffnung aufweist.

3. Einheit nach einem der Ansprüche 1 oder 2, dadurch gekennzeichnet, daß die unter Wärmeeinwirkung schrumpfende Hülse in dem Bereich perforiert ist, der nicht der eintretenden Flüssigkeit ausgesetzt ist.

**Claims**

1. Filtration module having a bundle of hollow filtering fibres mounted in a casing, characterized in that the bundle (2) is provided with a thermoretractable sheath (6) placed on a sleeve containing the bunble and serving as a baffle, level with the lateral orifices (5) of the casing (4).

2. Filtration module according to claim 1, characterized in that the bundle has at mid-height or nearer a thermoretractable sheath at the single lateral orifice.

3. Module according to one of the claims 1 and 2, characterized in that the thermoretractable sheath is perforated in its portion not exposed to the entering liquid.

LIQUIDE A TRAITER